Europäisches Patentamt

European Patent Office

Office européen des brevets

(11) Publication number: **0 067 924**
**B1**

(12) **EUROPEAN PATENT SPECIFICATION**

(45) Date of publication of patent specification: **02.10.85**

(51) Int. Cl.⁴: **G 01 V 3/08**, G 01 V 1/16

(21) Application number: **82101375.2**

(22) Date of filing: **24.02.82**

(54) **Method for predicting earthquakes.**

(30) Priority: **19.06.81 GR 65291**
**27.07.81 GR 65632**

(43) Date of publication of application:
**29.12.82 Bulletin 82/52**

(45) Publication of the grant of the patent:
**02.10.85 Bulletin 85/40**

(84) Designated Contracting States:
**AT BE CH DE FR GB IT LI LU NL SE**

(56) References cited:
DE-A-2 920 420
SU-A- 174 380
US-A-4 088 998

**PATENTS ABSTRACTS OF JAPAN, vol. 5, no. 202, 22nd December 1981, page 874P95;**

**JOURNAL OF THE AUDIO ENGINEERING SOCIETY, vol. 23, no. 6, July/August 1975, pages 469-470; R.C. HEYSER: "Earthquake prediction by acoustic methods"**

**J. Geomag, Geoelectr. 32, 721 (1980)**

The file contains technical information submitted after the application was filed and not included in this specification

(73) Proprietor: **Varotsos, Panagiotis**
**Knossou 36**
**Glyfada Athen (GR)**

(73) Proprietor: **Alexopoulos, Caesar**
**Spefsipou 7**
**Athen (GR)**

(73) Proprietor: **Nomikos, Constantin**
**Char. Trikoupi 154**
**Athen (GR)**

(72) Inventor: **Varotsos, Panagiotis**
**Knossou 36**
**Glyfada Athen (GR)**
Inventor: **Alexopoulos, Caesar**
**Spefsipou 7**
**Athen (GR)**
Inventor: **Nomikos, Constantin**
**Char. Trikoupi 154**
**Athen (GR)**

(74) Representative: **Blum, Rudolf Emil Ernst et al**
**c/o E. Blum & Co Patentanwälte Vorderberg 11**
**CH-8044 Zürich (CH)**

(56) References cited:
**T. Rikitake und M.B. Dobrin, "Introduction to Geophysical Prospecting", McGraw-Hill 1976, 3nd ed.**

Courier Press, Leamington Spa, England.

## Description

The need to predict earthquakes both in a medium time-range (several hours) and at short notice (several minutes) is obvious and could hitherto not be satisfied with sufficient reliability and precision. Various methods for the prediction of earthquakes based on changes of resistivity, magnetic field, earth currents, velocity of propagation and frequency of minor earthquakes have been described in the literature. None of them is able to indicate when the earthquake will occur except in a vague way, and no prediction could be made about the epicenter and the magnitude except in general terms.

Variations of the earth currents have been studied for a long time in the past. Examples of their form are described in the "Introduction to Geophysical Prospecting" (McGraw Hill 1976) by M. Dobrin as oscillations with periods of a few seconds to a few minutes. These variations can be detected simultaneously at two or more stations and are due to variations of the magnetic field of the earth that extends homogeneously over large areas and correlate with diurnal changes. A comparison of signals observed at different locations provides clues regading the local geological structures. Dobrin does not suggest any connection of this effect to earthquakes.

Variations of the earth currents can also be produced by underground explosions. This is described in the USSR patent SU A 174—380 which suggest the measurement of very high frequency variations of the electrical field induced by explosions in order to prospect for minerals. Similar effects result from seismic fractures; they produce the well-known "seismoelectric effect". As they occur practically simultaneously with the earthquake, this effect is of no value for predictions.

Variations of the electric field before earthquakes have been described by T. Rikitake et al., J. Geomag. Geoelectr. *32*, 721 (1980). These precursory variations

(1) are accompanied by synchronous variations of the magnetic field,

(2) do not consistently appear before each shock,

(3) occur a few months before the earthquake, and

(4) have a duration of the order of a month.

Thus, known methods for predicting earthquakes on the base of electrical measurements are unable to indicate when the earthquake will occur except in a vague way, and no prediction could be made about the magnitude except in general terms.

The invention aims at providing a method which allows predictions to be made with an excellent precision regarding the time of occurrence, and also with a useful accuracy regarding the magnitude of the earthquake to be expected.

To achieve this aim, the invention which is set out in claim 1, proposes to monitor the electrical field present in the earth so as to detect electrical pulses having either less than 10 ms duration and an intensity of 5 to 25 mV/min, or else 1 to 30 minutes duration and an intensity of 40—400 µV/m. The detection of these two types of signals then allows to predict an earthquake within 0.5 to 4 minutes and more than 6 hours beforehand, respectively, and thus makes it possible to issue either a short time or a long-range warning, according to circumstances.

In contrast to all other methods of predicting earthquakes the invention allows a prediction with an accuracy of $\pm\frac{1}{2}$ hour. Furthermore, it can also predict its intensity. A triggering circuit can even be set to give an alarm for an intensity that might be dangerous to a particular building, depending on its shape, material, foundations etc. The time lag of about 7 hours give ample time for an orderly evacuation of endangered buildings. Moreover, the uncertainty of about $\frac{1}{2}$ hour regarding the time of occurrence can be borne without undue discomfort as it will limit a possibly unnecessary evacuation time to 1 hour. If a network of such devices is spread over a large region and connected to a central computing station, then the epicenter and the magnitude of each earthquake can be calculated by triangulation and the endangered regions warned in time. The use of a network further reduces the risk of a false estimation of the measurement from a single device.

The invention will now be explained at hand of embodiments and of the drawing, where

Fig. 1 represents a block diagram of a part of a device according to the invention, and

Fig. 2 represents a block diagram of another embodiment.

The method and device of the invention base on the detection and analysis of so-called earth currents, or more exactly of varying potential differences, which occur in the earth previous to an earthquake, possibly due to pressure-induced polarization- and depolarization-currents, such as occur in crystals. The investors have found out two variations of the electrical field within the earth, which regularly precede an earthquake, it being understood that all numerical values given in the sequel are characteristic of regions geologically similar to that encompassing Greece, southern Italy, Turkey and Iran, and may vary to some degree elsewhere.

Two main electrical signals, detectable through buried electrodes connected through shielded leads to an operational amplifier, were found to precede an impending earthquake. One consists of an electric pulse with a duration of a few milliseconds and an intensity of about 10 mV/meter; this will occur between about $\frac{1}{2}$ and 4 minutes before the earthquake, depending on the circumstances. The other signal lasts about 1 minute, with an intensity around 100 µV/meter, and will occur approximately between 6 and 8 hours before the earthquake. Naturally, these values also depend on the magnitude of the earthquake and the distance from the epicenter at which the measurement is made.

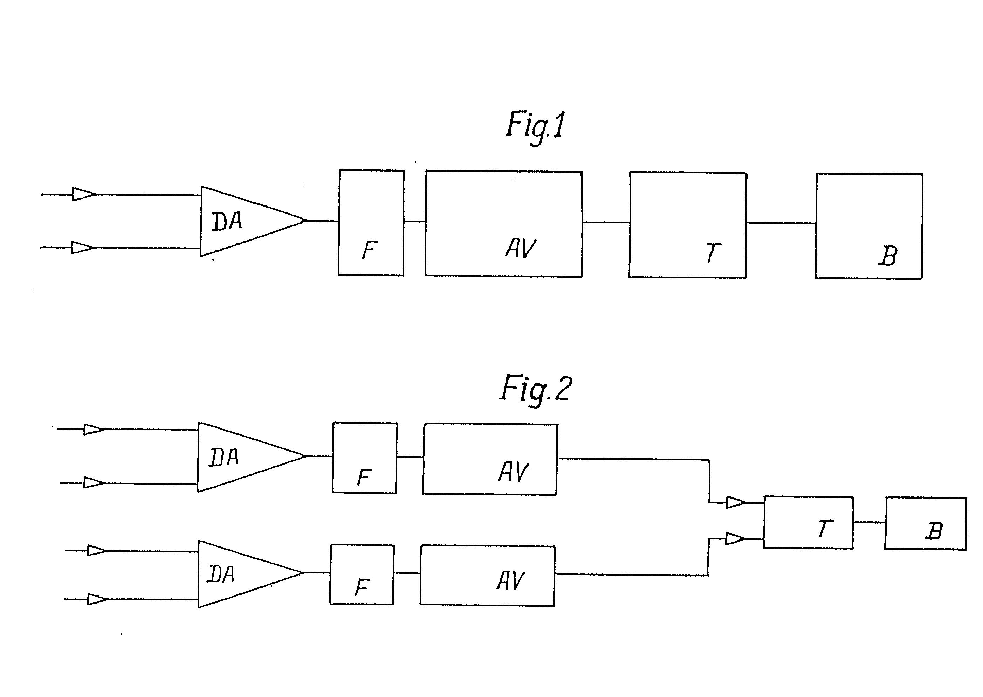

In order to detect these signals, it is, for instance, advantageous to use two cylindrical, metallic electrodes having a diameter of 5—10 cm and a length of 20—60 cm, buried about 100 m apart, and connected through a shielded conductor to an operational amplifier of gain unity, say. This amplifier, designated by DA in Fig. 1, has a floating ground, and its output is connected to a filter F, which suppresses the most important parasitic signals, due to the electrical mains in industrialized countries. Depending on the frequency of the mains, either 50 and 100 Hz, or 60 and 120 Hz should be suppressed. This is particularly important for an effective detection of that signal which precedes an earthquake by only a few minutes. The filter F is followed by an amplifier with variable gain AV, the output of which is in turn connected to a triggering circuit T, which itself triggers some sort of alarm device B, called a bell, for short, in what follows. Preferably, the circuitry just described is dimensioned so as to detect most effectively either the long-term or the short-term variations of the electrical field between the electrode. In the first case, i.e. for detecting preferentially the signals which occur a few hours before the earthquake, a further filter should be provided which attenuates or suppresses all frequencies above 0.5—1 Hz. In the second case, i.e. for the signals which occur shortly before an impending earthquake, frequencies below about 2 Hz should preferably be suppressed. The trigger T can be adjusted to some predetermined threshold value according to the magnitude of the earthquake which must be detected and to the local conditions. Above that threshold value, the bell B will be energized.

For general reasons of security, and in particular because earthquakes often occur in series, so that a preceding one may have damaged the mains when a new alarm becomes necessary, the circuitry used should comprise an independent energy source, such as a battery.

The strength of the electrical field which precedes an impending earthquake is directed essentially radially with respect to the epicenter. If, therefore, the direction in which an expected epicenter will lie is approximately known, then it is sufficient to use only two electrodes, aligned so as to optimally measure a field directed towards the expected epicenter. If the direction towards the most likely seismic region is not sufficiently well known, then it is preferable to use at least two pairs of electrodes with main measurement directions (i.e. essentially the direction in which the electrodes of a pair are aligned) essentially perpendicular to each other. Each pair of electrodes is then connected to one of the amplifiers DA shown in Fig. 2, where corresponding elements are identified by the same letter as in Fig. 1. In a manner similar to that of Fig. 1, each amplifier DA is followed by a filter F and an amplifier with variable gain AV. The output signals of both amplifiers with variable gain are led to one single triggering circuit T which either considers only the greater of the two, or evaluates a function of both and compares the latter to one or several threshold values. The electrodes should have a sufficient surface and be buried deep enough in the earth. Paarticularly cheap and efficient electrodes are provided by the metallic pillars on which some buildings rest. In order to eliminate the alternative fields due to the electric mains in industrialized regions, it is advantageous to provide electrical filters which filter out the most used frequencies and at least part of their harmonics. The basic frequencies which should thus be eliminated are 50 or 60 Hz — depending on the country — and possibly lower frequencies sometimes used for electrical railways, for instance.

Obviously, it is also possible to process the incoming signals more specifically, if necessary by the use of microprocessors which can perform a comparison with predetermined signal shapes wherever the general shape of the expected signal is known in more detail from previous observations. After filtering, amplifying and processing, the signal delivered by the electrode is used to trigger some sort of monitoring or alarm device. Because the strength of the electrical field becomes stronger with an increasing magnitude of the earthquake to be expected, a threshold device can be used to trigger different alarm levels, depending on the strength of the incoming signal. The lowest alarm levels can be used merely to activate a recording organ which will record the signal shape for future reference.

Because, even with two pairs of electrodes oriented at right angle to each other, it is impossible to determine with sufficient accuracy the position of the epicenter from measurements taken at one single site, it is useful to combine by triangulation the signals picked up at different geographical sites into a final reading, taking into account that the field variations become weaker as the distance form the epicenter increases.

**Claims**

1. Method for predicting earthquakes by monitoring the electrical field present in the earth, so as to detect electrical pulses characterised by detecting pulses having either less than 10 ms duration and an intensity of 5 to 25 mV/m or 1 to 30 minutes duration and an intensity of 40 to 400 µV/m.

2. Method according to claim 1, characterised in that the monitoring is done at several places, and in that the times of occurrence and the intensities of the electrical pulses detected at said places are then compared, so that the magnitude of the earthquake can be predicted.

3. Method according to claim 2, characterized in that the comparison encompasses a triangulation based on a decrease in the intensity of the measured field strength with increasing distance from the epicenter, so that the position of the earthquake can be predicted.

**Patentansprüche**

1. Verfahren zur Erdbebenvoraussage durch Überwachung des in der Erde vorhandenen elektrischen Feldes, um so elektrische Pulse zu erfassen, gekennzeichnet durch die Erfassung von Pulsen entweder mit einer Dauer von weniger als 10 ms und einer Intensität von 5 bis 25 mV/m oder 1 bis 30 Minuten Dauer und einer Intensität von 40 bis 400 µV/m.

2. Verfahren nach Anspruch 1, dadurch gekennzeichnet, daß die überwachung an verschiedenen Orten gemacht wird und daß die Zeiten des Auftretens und die Intensitäten der an diesen Orten erfaßten elektrischen Pulse dann verglichen werden, so daß die Stärke des Erdbebens vorausgesagt werden kann.

3. Verfahren nach Anspruch 2, dadurch gekennzeichnet daß der Vergleich eine Dreieckmessung einschließt, die auf einer Abnahme der Intensität der gemessenen Feldstärke mit einer Zunahme der Entfernung vom Epizentrum beruht, so daß der Ort des Erdbebens vorausgesagt werden kann.

**Revendications**

1. Méthode pour la prédiction de tremblements de terre, en surveillant le champ électrique présent dans la terre, en sorte de détecter des impulsions électriques λ, caractérisée en ce que l'on détecte des impulsions ayant soit une durée de moins de 10 ms et une intensité de 5 à 25 mV/m, soit une durée de 1 à 30 minutes et une intensité de 40 à 400 µV/m.

2. Méthode suivant la revendication 1, caractérisée en ce qu'on procède à la surveillance en plusieurs endroits et en ce qu'on compare ensuite les instants d'arrivée et les intensités des impulsions électriques détectées en ces endroits, en sorte que l'on puisse prédire la grandeur du tremblement de terre.

3. Méthode suivant la revendication 2, caractérisée en ce que la comparaison comprend une triangulation basée sur une diminution d'intensité de la force d champ, mesurée avec la distance croissante à l'épicentre, en sorte qu'on puisse prédire la position du tremblement de terre.

*Fig.1*

*Fig.2*